# FASCICULE DE BREVET EUROPEEN

(11) **EP 2 619 155 B1**
(45) Date de publication et mention de la délivrance du brevet: **11.01.2023**
(21) Numéro de dépôt: 10769016.6
(22) Date de dépôt: 22.09.2010
(51) Int. Cl.: C04B 35/18, C04B 35/19, C04B 38/00, A01G 27/00, A01G 29/00

(54) **PROCEDE DE REALISATION D'UN ELEMENT POREUX EN CERAMIQUE POUR LA DIFFUSION D'UN LIQUIDE**
METHOD FOR MAKING A POROUS CERAMIC ELEMENT FOR DIFFUSING A LIQUID
METHOD FOR MAKING A POROUS CERAMIC ELEMENT FOR DIFFUSING A LIQUID

(43) Date de publication de la demande: 31.07.2013
(73) Titulaire: Exel Industries, 51200 Epernay (FR)
(72) Inventeur: BRAULT, Benoît, Serge, Claude, F-64390 Sauveterre de Bearn (FR)
(74) Mandataire: Argyma
(86) Numéro de dépôt international: PCT/FR2010/051981
(87) Numéro de publication internationale: WO 2012/038610

(56) Documents cités:
- WO-A1-03/007697
- GB-A- 2 260 538

## Description

La présente invention se rapporte à un procédé de réalisation d'un élément poreux en céramique pour la diffusion d'un liquide.

On connait d'après le document WO-03/007697 un dispositif d'arrosage comprenant un cône poreux en matériau céramique relié à un embout en polychlorure de vinyle. Ce dispositif est relié à un réservoir d'eau, notamment une bouteille en plastique, puis le cône est partiellement enfoncé dans la terre pour diffuser par gravité l'eau dans la terre grâce à la porosité de la céramique.

Sur le plan fonctionnel, les cônes poreux doivent délivrer une quantité d'eau adaptée à la plante auxquels ils sont associés. Ainsi, il existe plusieurs modèles de cônes poreux qui s'adaptent sur le même modèle d'embout, chaque modèle ayant un débit d'eau théorique différent des autres, par exemple de l'ordre de 7 cl par jour, 20 cl par jour, 30 cl par jour.

Chaque cône est obtenu à partir d'une barbotine coulée dans un moule sous pression. Après démoulage, le cône cru est séché puis cuit. Pour moduler la porosité, on ajuste la composition de la barbotine.

Compte tenu de la rigidité de l'embout et des précisions dimensionnelles obtenues à partir du procédé de moulage, chaque cône doit être usiné pour que la portée extérieure puisse être emboitée en force dans un embout.

Ce mode de réalisation ne donne pas pleinement satisfaction car il ne permet pas d'obtenir un débit fiable.

La présente invention vise à pallier aux inconvénients de l'art antérieur en proposant un procédé de réalisation d'un élément poreux en céramique pour la diffusion d'un liquide permettant de maîtriser le débit réel.

A cet effet, l'invention est exposée dans le jeu de revendications joint.

D'autres caractéristiques et avantages ressortiront de la description qui va suivre de l'invention, description donnée à titre d'exemple uniquement, en regard des dessins annexés sur lesquels :
- la figure 1 est une vue en perspective d'un dispositif d'arrosage intégrant un élément poreux en céramique pour la diffusion d'un liquide implanté dans un pot de fleur,
- la figure 2 est une section selon un plan longitudinal d'un élément poreux en céramique et d'un embout,
- la figure 3 est une coupe illustrant deux parties d'un moule pour l'obtention d'un élément poreux en céramique,
- la figure 4 est une représentation schématique d'une machine de coulage sous pression pour l'obtention d'éléments poreux en céramique,
- la figure 5 est une vue de face de la partie supérieure du moule,
- la figure 6 est une vue de face de la partie inférieure du moule,
- la figure 7A est une vue de face illustrant une autre variante d'une partie supérieure d'un moule, et
- la figure 7B est une coupe de la variante visible sur la figure 7A.

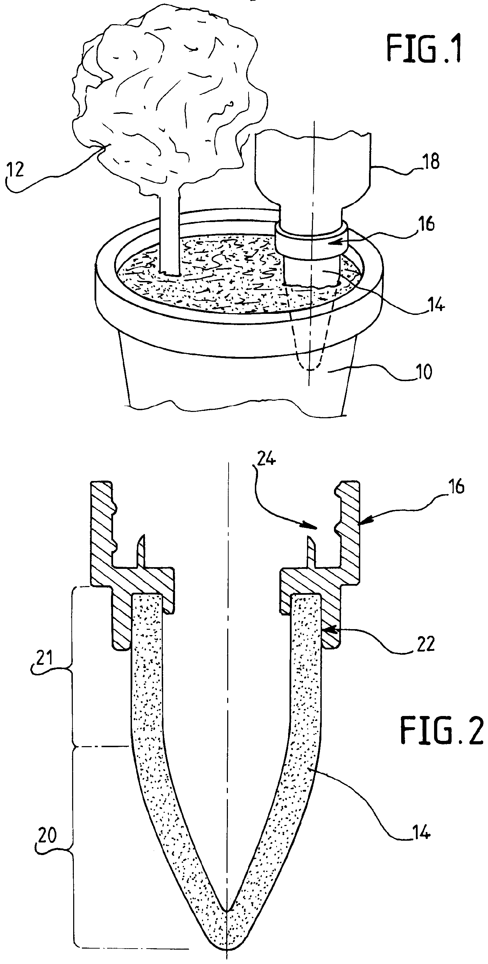

Sur la figure 1, on a représenté un dispositif d'arrosage permettant de diffuser de l'eau dans un pot 10 rempli de terre dans lequel pousse une plante 12. Cependant, l'invention n'est pas limitée à cette application, le dispositif pouvant être implanté dans tout substrat dans lequel on cherche à diffuser un liquide avec un débit contrôlé.

De manière connue, le dispositif comprend un élément poreux en céramique 14 partiellement enfoncé dans le substrat solidaire d'un embout 16 pour le relier à un réservoir amovible 18 contenant le liquide à diffuser dans le substrat. Le liquide s'écoule par gravité du réservoir 18 vers le substrat grâce à la porosité de l'élément 14.

Pour permettre son enfoncement dans le substrat et garantir la diffusion du liquide, l'élément poreux 14 comprend au niveau de son extrémité une portion conique creuse 20 qui est surmontée d'une portion sensiblement cylindrique creuse 21, comme illustré sur la figure 2. De préférence, l'élément poreux 14 a une épaisseur sensiblement constante.

Pour la suite de la description, on entend par direction longitudinale, la direction parallèle à l'axe de la portion conique 20 et à celui de la portion cylindrique 21. Par plan longitudinal, on entend un plan contenant l'axe de la portion conique 20 et celui de la portion cylindrique 21. Par plan transversal, on entend un plan perpendiculaire à la direction longitudinale.

L'embout 16 a une forme de révolution selon l'axe longitudinal et forme un conduit avec à une première extrémité des moyens de liaison 22 avec l'élément poreux 14 en céramique et à la seconde extrémité des moyens de liaison 24 avec le réservoir amovible 18.

Les moyens de liaison 24 doivent permettre de dissocier rapidement le réservoir amovible 18. L'embout 16 peut comprendre au niveau de la seconde extrémité un alésage avec un pas de vis permettant de solidariser le réservoir 18 par vissage.

Les moyens de liaison 22 doivent limiter la désolidarisation de manière intempestive de l'embout 16 et de l'élément poreux 14. L'embout 16 peut comprendre au niveau de la première extrémité un alésage dont le diamètre intérieur est adapté au diamètre extérieur de l'élément poreux 14 afin d'obtenir un emmanchement en force dudit élément poreux dans l'embout.

L'embout est réalisé au moins au niveau de la première extrémité en un matériau suffisamment souple pour pouvoir légèrement se comprimer au niveau des moyens de liaison 22. Cette solution permet d'obtenir un emmanchement satisfaisant qui tolère un intervalle de tolérance plus important au niveau du diamètre de la portée de l'élément poreux emmanché. La précision dimensionnelle obtenue à l'issue du procédé de fabrication par moulage sous pression d'une barbotine est satisfaisante et ne nécessite pas un usinage ultérieur pour réduire l'intervalle de tolérance.

L'embout 16 peut être réalisé en SEBS (Styrène-Ethylène-Butylène-Styrène) avec une dureté Shore de 90. Cette matière est relativement élastique ce qui permet de palier aux irrégularités de l'élément poreux 14 en céramique.

Cette solution permet de réduire fortement les coûts de fabrication en limitant les rebus au niveau de la fabrication des éléments poreux 14 en céramique qui ne sont plus usinés ultérieurement.

Selon un autre avantage, la relative souplesse du matériau de l'embout permet d'emmancher en force l'élément poreux 14 en assurant l'étanchéité.

De manière connue, l'élément poreux 14 est obtenu à partir d'une barbotine coulée sous pression. L'élément obtenu à l'issue de l'opération de moulage est ensuite séché puis cuit.

La composition de la barbotine est la suivante :
- 20 à 35 % d'argile commercialisée sous la dénomination commerciale « Argile Stephan Schmidt 2100 »,
- 10 à 40 % de silice,
- 20 à 35 % de kaolin commercialisé sous la dénomination « Kaolin Soka 111 »,
- 15 à 25 % de feldspath sodique,
- de préférence, au moins un agent de défloculation,
- de préférence, au moins un agent favorisant la prise et agglomérant les fines.

Sur le plan pratique, l'élément poreux doit avoir une porosité adaptée pour garantir un débit de liquide donné.

A titre d'exemple, on peut prévoir trois types d'éléments poreux avec des débits différents. Par exemple, un premier type d'éléments poreux a un débit de l'ordre de 7 cl par jour, un deuxième type d'éléments poreux a un débit de l'ordre de 20 cl par jour et un troisième type d'éléments poreux a un débit de l'ordre de 30 cl par jour.

La porosité de l'élément 14 est déterminée en fonction du pourcentage de silices et de la granulométrie de ces dernières.

Pour obtenir le débit intermédiaire, on utilise pour la silice de l'ordre de 40 % d'une silice avec une répartition granulométrique d'un premier type avec de l'ordre de 30% de fines avec un diamètre supérieur à 40 *µ*m, et seulement 10% de fines avec un diamètre supérieur à 75 *µ*m et 60 % d'une silice avec une répartition granulométrique d'un second type avec de l'ordre de 20% de fines avec un diamètre supérieur à 80 *µ*m.

Pour obtenir le débit le plus important, on utilise pour la silice de l'ordre de 30 % d'une silice avec une répartition granulométrique du premier type et 70 % d'une silice avec une répartition granulométrique du second type.

Pour obtenir le débit le plus faible, on utilise uniquement la silice avec une répartition granulométrique du premier type avec de l'ordre de 30% de fines avec un diamètre supérieur à 40 *µ*m, et seulement 10% de fines avec un diamètre supérieur à 75 *µ*m.

La silice avec la répartition granulométrique du second type a une granulométrie plus grossière que la silice avec la répartition granulométrique du premier type ce qui permet d'augmenter le débit.

Ainsi, en ajustant le pourcentage d'au moins deux types de silices avec des granulométries différentes, il est possible d'ajuster le débit des éléments poreux 14.

Le pourcentage de la silice avec la répartition granulométrique du premier type, plus fine, n'est jamais nul et de préférence supérieur à 10 % pour conférer à l'élément poreux 14 en céramique une résistance mécanique adaptée pour ne pas risquer de le casser lors du montage dans l'embout 16.

A titre d'exemple, pour le débit le plus faible, la barbotine a la composition suivante :
- 30% (avec une précision de +/-5%) d'argile commercialisée sous la dénomination commerciale « Argile Stephan Schmidt 2100 »,
- 33% (avec une précision de +/-5%) de kaolin commercialisé sous la dénomination « Kaolin Soka 111 »,
- 15% (avec une précision de +/-5%) de silice du premier type,
- 22% (avec une précision de +/-5%) de feldspath sodique, et
au moins un agent de défloculation et au moins un agent favorisant la prise et agglomérant les fines.

Pour un débit intermédiaire, la barbotine a la composition suivante :
- 25% (avec une précision de +/-5%) d'argile commercialisée sous la dénomination commerciale « Argile Stephan Schmidt 2100 »,
- 27% (avec une précision de +/-5%) de kaolin commercialisé sous la dénomination « Kaolin Soka 111 »,
- 12% (avec une précision de +/-5%) de silice du premier type,
- 18% (avec une précision de +/-5%) de silice du second type,
- 18% (avec une précision de +/-5%) de feldspath sodique, et
au moins un agent de défloculation et au moins un agent favorisant la prise et agglomérant les fines.

Pour le débit le plus important, la barbotine a la composition suivante :
- 22% (avec une précision de +/-5%) d'argile commercialisée sous la dénomination commerciale « Argile Stephan Schmidt 2100 »,
- 24% (avec une précision de +/-5%) de kaolin commercialisé sous la dénomination « Kaolin Soka 111 »,
- 11% (avec une précision de +/-5%) de silice du premier type,
- 27% (avec une précision de +/-5%) de silice du second type,
- 16% (avec une précision de +/-5%) de feldspath sodique, et
au moins un agent de défloculation et au moins un agent favorisant la prise et agglomérant les fines.

Le procédé de moulage sous pression ainsi que la cuisson des éléments poreux 14 ne doivent pas altérer la valeur du débit conféré par le pourcentage d'au moins deux silices avec des granulométries différentes.

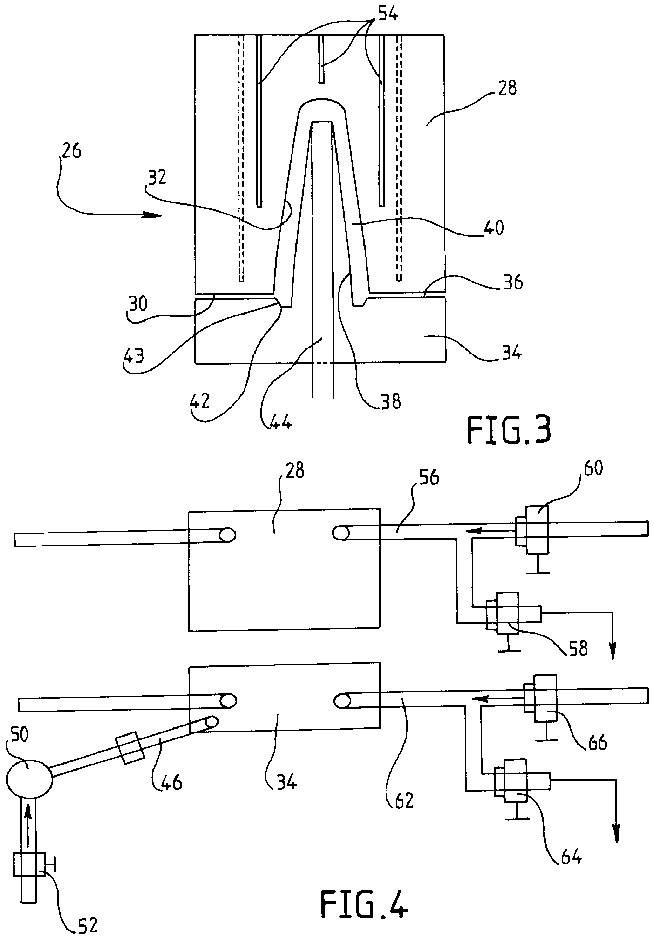

Le moulage de l'élément poreux est réalisé sous pression dans un moule 26 illustré en détails sur la figure 3.

Ce moule 26 comprend une partie supérieure 28 offrant une surface plane d'appui 30 (parallèle à un plan transversal) avec pour chaque élément poreux 14 une forme en creux 32 et une partie inférieure 34 offrant une surface plane d'appui 36 (parallèle à un plan transversal) avec pour chaque élément poreux 14 une forme en saillie 38.

Lorsque les surfaces planes d'appui 30 et 36 sont en contact, un espace 40 est formé entre la forme en creux 32 et la forme en saillie 38 dont les dimensions sont adaptées pour obtenir en fin de procédé un élément poreux aux dimensions souhaitées.

Selon une variante améliorée illustrée sur la figure 2, pour chaque élément poreux 14, la partie inférieure 34 comprend autour de la forme en saillie conique 38 une rigole 42 avec un chanfrein 43 pour conférer à l'élément poreux un chanfrein au niveau de l'extrémité de la portion cylindrique susceptible d'être emmanchée dans un embout afin de favoriser cet emmanchement.

La partie supérieure 28 et la partie inférieure 34 du moule comprennent respectivement plusieurs formes en creux 32 et plusieurs formes en saillie 38 qui coopèrent de manière à obtenir en une seule opération de moulage plusieurs éléments poreux crus.

Au moins la portion de la partie supérieure 28 dans laquelle sont réalisées les formes en creux est réalisée en une résine poreuse. De préférence, les formes en saillie de la partie inférieure 34 du moule sont réalisées en une résine poreuse.

Les formes en creux de la partie supérieure 28 et les formes en saillie de la partie inférieure 34 sont usinées de manière à garantir une bonne précision dimensionnelle, la résine poreuse ayant un retrait important ne permettant pas de garantir la précision dimensionnelle.

Le moule comprend pour chaque forme en saillie 38 une alimentation 44 en barbotine qui débouche au sommet de la forme en saillie 38.

De préférence, les différentes alimentations 44 sont reliées à une alimentation centrale 46 alimentée par une pompe d'injection 50 et commandée par une électrovanne 52 d'alimentation en barbotine.

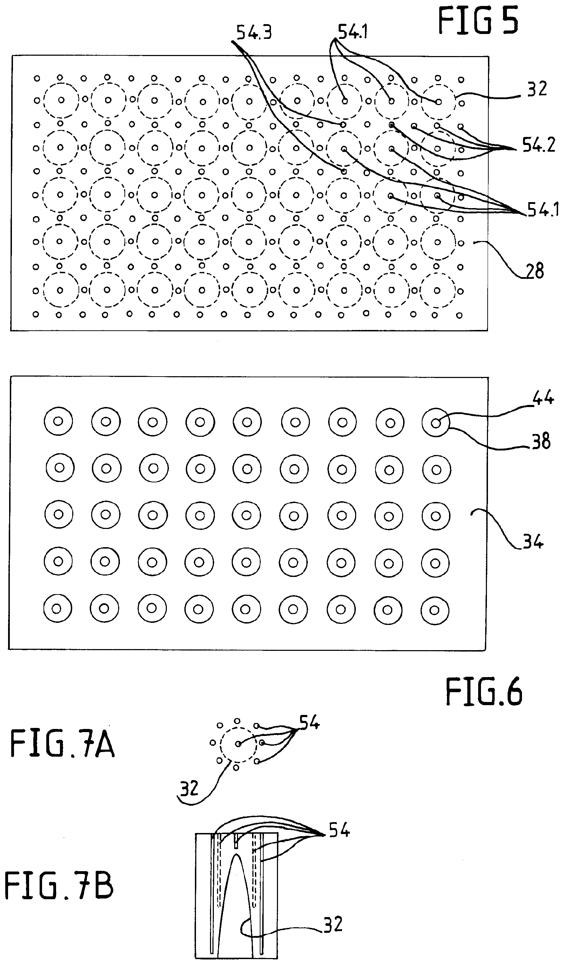

Comme illustré sur la figure 5, la partie supérieure 28 comprend des canaux 54 d'air qui s'étendent parallèlement à la direction longitudinale et débouchent dans un collecteur 56 prévu au niveau de la face de la partie supérieure opposée à la surface plane d'appui 30. Les canaux d'air 54 sont de préférence borgnes et se terminent à proximité de la surface plane d'appui 30 ou de la surface formant les formes en creux 32.

Les canaux d'air 54 ont de préférence un diamètre de l'ordre de 3 mm.

Selon un mode de réalisation, illustré sur la figure 5, un canal d'air 54.1 est prévu au niveau du sommet de chaque forme en creux 32. Des canaux d'air 54.2 sont prévus entre deux canaux d'air 54.1 selon une première direction et des canaux d'air 54.3 sont prévus entre deux canaux d'air 54.1 selon une direction perpendiculaire à la première.

Selon une autre variante illustrée sur les figures 7A et 7B, il est possible de densifier les canaux d'air 54 prévus autour des formes en creux.

Le collecteur 56 est relié à une électrovanne d'échappement 58 et à une électrovanne d'alimentation en air 60.

De la même manière, la partie inférieure 34 du moule peut comprendre des canaux d'air débouchant dans un collecteur 62 relié à une électrovanne d'échappement 64 et à une électrovanne d'alimentation en air 66.

Le cycle de fabrication des éléments poreux crus est le suivant.

Dans un premier temps, les parties supérieure et inférieure sont plaquées l'une contre l'autre en exerçant une pression de serrage.

Les collecteurs d'air 56 et 62 sont reliés à l'échappement. Ainsi, les électrovannes 58 et 64 sont à l'état passant et les électrovannes 60 et 66 à l'état non passant.

On injecte alors la barbotine. La résine poreuse du moule permet l'évacuation de l'eau. Après le remplissage des espaces 40 à une vitesse donnée, l'injection de la barbotine est arrêtée. Après un temps donné, l'électrovanne 52 de l'alimentation est mise à l'état non passant. En suivant, les électrovannes d'échappement 58 et 64 sont mises à l'état non passant.

On arrête alors la pression hydraulique.

Après une certaine durée, la partie supérieure 28 du moule est écartée de la partie inférieure 34 du moule. Pour faciliter le démoulage des pièces de la partie inférieure 34 du moule, on relie le collecteur d'air 62 à une alimentation en air comprimé, l'électrovanne d'alimentation en air 66 étant à l'état passant. En complément, on peut à l'aide d'une pompe à vide faire le vide dans le circuit de la partie supérieure du moule afin de faciliter le maintien des pièces dans cette partie du moule.

Les éléments poreux crus sont maintenus dans la partie supérieure 28 du moule.

On dispose alors sous ladite partie supérieure 28 une plaque ajourée, puis on relie le collecteur d'air de la partie supérieure à une alimentation en air comprimée afin de démouler les pièces, l'électrovanne d'alimentation en air 60 étant à l'état passant.

Pour ne pas marquer les pièces, la plaque ajourée comprend une pluralité de trous traversant d'un diamètre compris entre 1 et 4 mm. Cette plaque ajourée doit avoir un taux d'ouvert compris entre 40 et 70% pour assurer un bon compromis entre une évacuation satisfaisante de l'eau et ne pas obtenir de marque au niveau des éléments poreux crus.

De préférence, les éléments poreux crus subissent un pré-séchage naturel par convection naturelle par exemple.

En suivant, ils subissent un cycle de cuisson. Ce cycle de cuisson est primordial car il garantit le caractère homogène de la porosité.

Selon un mode de réalisation, on utilise un four à passage.

Le cycle de cuisson a une durée de l'ordre de 90 min et comprend quatre phases, une première phase de préchauffage à une température de l'ordre de 900°C pendant une durée de l'ordre de 20 à 24 min, soit environ 25% de la durée totale, une deuxième phase de montée en température jusqu'à une température de l'ordre de 1160°C pendant une durée de l'ordre de 10 à 12 min, soit environ 12% de la durée totale, une troisième phase correspondant à un pallier et un maintien à la température de la deuxième phase pendant une durée de 10 à 12 min, soit environ 12% de la durée totale, et une quatrième phase de refroidissement à une température de l'ordre de 740°C pendant une durée de 10 à 12 min, soit environ 12% de la durée totale, puis 30 à 36 min jusqu'à la sortie du four pour limiter les chocs thermiques.

Il est possible d'ajuster la porosité en faisant varier la température des deuxième et troisième phases et la durée desdites phases. Ainsi, il est possible d'augmenter la porosité des éléments poreux en réduisant la durée d'au moins une des phases 2 et 3 et/ou en réduisant la température des phases 2 et 3.

## Revendications

1. Procédé de réalisation d'un élément poreux en céramique pour la diffusion d'eau pour l'arrosage, ledit procédé comprenant une étape de moulage sous pression d'une barbotine puis une étape de cuisson, **caractérisé en ce que** la barbotine comprend de 10 à 40 % de silices dont 30 à 100 % d'une silice avec une répartition granulométrique d'un premier type et 0 à 70% d'une silice avec une répartition granulométrique d'un second type avec un pourcentage de fines de gros diamètres plus important que la répartition granulométrique du premier type, la silice avec une répartition granulométrique du premier type comprenant 30% de fines avec un diamètre supérieur à 40 µm, et seulement 10% de fines avec un diamètre supérieur à 75 µm, la silice avec une répartition granulométrique du second type comprenant 20% de fines avec un diamètre supérieur à 80 µm, et **en ce que** la barbotine comprend en outre 20 à 35 % d'argile, 20 à 35 % de kaolin et 15 à 25 % de feldspath sodique.

2. Procédé de réalisation d'un élément poreux en céramique selon la revendication précédente, **caractérisé en ce que** l'étape de cuisson comprend quatre phases, une première phase de préchauffage à une température de 900°C, une deuxième phase de montée en température jusqu'à une température de 1160°C, une troisième phase correspondant à un pallier et un maintien à la température de la deuxième phase et une quatrième phase de refroidissement à une température de 740°C pour limiter les chocs thermiques.

## Patentansprüche

1. Verfahren zur Herstellung eines porösen Keramikelements für die Verteilung von Wasser zum Gießen, wobei das Verfahren einen Schritt des Formens einer Aufschlämmung unter Druck, dann einen Schritt des Brennens umfasst, **dadurch gekennzeichnet, dass** die Aufschlämmung 10 bis 40 % Siliziumdioxide umfasst, davon 30 bis 100 % eines Siliziumdioxids mit einer Korngrößenverteilung eines ersten Typs und 0 bis 70 % eines Siliziumdioxids mit einer Korngrößenverteilung eines zweiten Typs mit einem höheren Prozentsatz von Feinanteilen mit großen Durchmessern als die Korngrößenverteilung des ersten Typs, wobei das Siliziumdioxid mit einer Korngrößenverteilung des ersten Typs 30 % Feinanteile mit einem Durchmesser über 40 µm und nur 10 % Feinanteile mit einem Durchmesser über 75 µm umfasst, wobei das Siliziumdioxid mit einer Korngrößenverteilung des zweiten Typs 20 % Feinanteile mit einem Durchmesser über 80 µm umfasst, und dass die Aufschlämmung ferner 20 bis 35 % Ton, 20 bis 35 % Kaolin und 15 bis 25 % Natronfeldspat umfasst.

2. Verfahren zur Herstellung eines porösen Keramikelements nach vorangehendem Anspruch, **dadurch gekennzeichnet, dass** der Schritt des Brennens vier Phasen umfasst, eine erste Vorwärmphase auf eine Temperatur von zirka 900 °C, eine zweite Temperatursteigerungsphase bis auf eine Temperatur von zirka 1160 °C, eine dritte Phase, die einer Stufe und einem Halten auf der Temperatur der zweiten Phase entspricht und eine vierte Abkühlphase auf eine Temperatur von 740 °C zur Begrenzung thermischer Schocks.

## Claims

1. A method for making a porous ceramic element for water diffusion for spraying, said method comprising a step of die casting a slurry and then a firing step, **characterised in that** the slurry comprises from 10 to 40% of silicas of which 30 to 100% of a silica with a particle size distribution of a first type and 0 to 70% of a silica with a particle size distribution of a second type with a percentage of fines of large diameter greater than the particle size distribution of the first type, the silica with a particle size distribution of the first type comprising 30% of fines with a diameter greater than 40 µm, and only 10% of fines with a diameter greater than 75 µm, the silica with a particle size distribution of the second type comprising 20% of fines with a diameter greater than 80 µm, and **in that** the slurry further comprises 20 to 35% of clay, 20 to 35% of kaolin and 15 to 25% of sodium feldspar.

2. The method for making a porous ceramic element according to the preceding claim, **characterised in that** the firing step comprises four phases, a first preheating phase at a temperature of 900°C, a second temperature rise phase up to a temperature of 1160°C, a third phase corresponding to a plateau and maintaining the temperature of the second phase and a fourth cooling phase at a temperature of 740°C to limit heat shocks.
